# EUROPÄISCHE PATENTANMELDUNG

(11) **EP 3 480 566 A1**
(43) Veröffentlichungstag der Anmeldung: **08.05.2019**
(21) Anmeldenummer: 18204925.4
(22) Anmeldetag: 07.11.2018
(51) Int. Cl.: G01F 1/32

(54) **EIN DURCHLAUFERHITZERGERÄT MIT DURCHLAUFMESSER**

(30) Priorität: 07.11.2017 TR 201717456
(71) Anmelder: Bosch Termoteknik Isitma ve Klima Sanayi Ticaret Anonim Sirketi, 45030 Manisa (TR)
(72) Erfinder: Ekbul, Ali, 45030 Manisa (TR)
(74) Vertreter: Bee, Joachim

(57) **Zusammenfassung**

Bei dieser Erfindung handelt es sich um einen Durchlauferhitzer, bei dem in einer Rohrleitung (10) eine Flüssigkeitszirkulation erzeugt und dessen Durchfluss in Masseneinheiten gemessen werden soll, und der über einen an die besagte Rohrleitung (10) angeschlossenen Wirbeldurchflussmesser (20), der wiederum über ein Messröhrchen (30) verfügt, und dass in dem besagten Messröhrchen (30) eine Barriere (33) so positioniert ist, dass, wenn sie dem Durchfluss ausgesetzt ist, Verwirbelungen entstehen und die dadurch in der Rohrleitung (30) oder im Messröhrchen (30) entstehenden mechanischen Vibrationen durch einen Vibrationssensor (50) empfangen werden und diese den Wirbelablösungsfrequenzen entsprechend in Spannungssignale umgewandelt werden, und über eine elektronische Kontrolleinheit (60) verfügt, über die zumindest ein quantitativer Messparameter des Durchflusses anhand der besagten Spannungssignale bestimmt werden soll, wobei das Zusammensetzungsprinzip so ist, dass die Barriere (33) so positioniert ist, dass, wenn sie dem Durchfluss ausgesetzt ist, Verwirbelungen mit hohen und niedrigen Wirbelablösungsfrequenzen (36, 37) erzeugt werden und die besagte Barriere (33) innerhalb des Messröhrchens (30) im Verhältnis zu der zentralen Längsachse (100) des Messröhrchens (30) asymmetrisch angeordnet ist.

## Beschreibung

Die Erfindung betrifft Wassererhitzer mit Durchlaufmesser und insbesondere Wassererhitzer, die den technischen Stand nach Anspruch 1 betreffen. Die Erfindung steht des Weiteren in Zusammenhang mit einer neuartigen Betriebsart und der Verwendung eines Durchlaufmessers.

### Technischer Anwendungsbereich

Bei geschlossenen Rohrleitungssystemen wie Wassererhitzern, bei denen Wärmewasser oder sonstige Flüssigkeiten zirkuliert werden, müssen Masse- oder Volumeneinheiten wie Durchflussrate oder Temperatur gemessen werden. Hierzu können sogenannte Wirbeldurchflussmesser (Vortex flowmeter) eingesetzt werden. Wirbeldurchflussmesser funktionieren gemäß dem physikalischen Prinzip des sogenannten gemischten Wirbeldurchflusses. Dabei wird in einer Messröhre in der Fließrichtung der jeweiligen Flüssigkeit eine Art Stau-Barriere eingeführt, die beim Aufprall der Flüssigkeit Verwirbelungen erzeugt.

Die erzeugten Verwirbelungen führen dazu, dass innerhalb der Rohrleitung Vibrationen entstehen. Die vibrationsbedingten Wirbelablösungsfrequenzen (vortex shedding frequency), die im Zusammenhang mit diesen Vibrationen entstehen, können durch einen am Verwirbelungspunkt zum Einsatz kommenden Vibrationssensor wahrgenommen werden. Die durch den Vibrationssensor gemessene Wirbelablösungsfrequenz wird durch eine elektronische Kontrolleinheit abgelesen. Diese elektronische Kontrolleinheit kann, anhand der im Speicher integrierten Software entsprechend den ermittelten Frequenzwerten, gemäß den in der Technik angewandten mathematischen Formeln, Masse- oder Volumeneinheiten bestimmen.

Bei vorhandenen Techniken kommen Wirbeldurchflussmesser zum Einsatz, welche die oben beschriebene Funktion erfüllen. So kann z. B. beim Patentantrag mit Nr. US2008314160 der Abstand zwischen dem Vibrationssensor und der Barriere variabel eingestellt werden, womit ein Wirbeldurchflussmesser beschrieben wird, der sich problemlos verschiedenen mechanischen Flüssigkeitskonfigurationen anpassen kann.

Bei dem Patentantrag mit Nr. WO04001343 hingegen wird ein Wirbeldurchflussmesser beschrieben, bei dem die Länge des Messrohres reduziert und somit die Richtigkeit der Messwerte um einen bemerkenswerten Anteil erhöht wird. Um dies zu gewährleisten werden entlang des Messquerschnittes mindestens zwei wirbelerzeugende Barrieren positioniert und somit entstandene asymmetrische Durchflussgeschwindigkeiten gemessen.

Bei herkömmlichen Techniken müssen für die Feststellung der Parameter wie Durchflusstemperatur/-rate bei Wasserzyklus-Systemen, wie z. B. Wassererhitzern, zwei verschiedene Wirbeldurchflussmesser eingesetzt werden. Andererseits können sich die mechanischen Vibrationen mit den durch die Verwirbelungen erzeugten Vibrationen vermischen, was dazu führen kann, dass die Messung in manchen Situationen nicht ausreichend korrekt erfolgt.

### KURZDARSTELLUNG DER ERFINDUNG

Mit dieser Erfindung wird beabsichtigt, die Probleme nach dem Stand der Technik im Rahmen des oben aufgeführten Sachverhaltes zu eliminieren.

Demnach ist eines der Ziele dieser Erfindung, Parameter zur Durchflusstemperatur oder -rate durch Einsatz eines einzigen Wirbeldurchflussmessers akkurat ermitteln zu können.

Ein weiteres Ziel dieser Erfindung ist es, die an Messpunkten vorhandenen mechanischen Vibrationen geschuldeten Messabweichungen beheben zu können.

Bei der Erfindung handelt es sich im Rahmen der oben aufgeführten Grundlagen und den im Folgenden detailliert aufgelisteten sämtlichen Zielsetzungen um einen Wassererhitzer mit integrierter elektronischer Kontrolleinheit, bei der die Flüssigkeitszirkulation in einer geschlossenen Rohrleitung erzeugt werden soll, die quantitative Messung des Durchflusses durch einen Wirbeldurchflussmesser, der über eine Messröhre verfügt und in die eine Barriere eingebunden ist, welche bei dem Kontakt mit dem Durchfluss Verwirbelungen erzeugt, bestimmt werden soll und dabei ein Vibrationssensor zum Einsatz kommt, der durch Verwirbelungen innerhalb der Rohrleitung oder des Messrohres entstandene Vibrationen feststellt und mit dem die Wirbelablösungsfrequenzen in Spannungssignale umgewandelt und durch diese Spannungssignale zumindest eine der quantitativen Maßeinheiten bestimmt werden soll. Die Eigenschaft dieses Wassererhitzers ist, dass die Barrieren asymmetrisch innerhalb der zentralen Längsachse der Messröhre positioniert werden und somit beim Aufprall des Durchflusses auf die Barriere Verwirbelungen mit hohen und niedrigen Wirbelablösungsfrequenzen erzeugt werden können.

Je nach Anspruch besitzt die Erfindung die Eigenschaft, dass die Barriere an der zentralen Längsachse der Messröhre durch ein Rohrstück und an einer anderen Stelle der zentralen Längsachse durch ein zweites Rohrstück definiert ist und somit zwei nicht äquivalente Abschnitte beinhaltet.

Eine weitere mögliche Konstruktionseigenschaft dieser Erfindung ist die Definition der zwei nicht äquivalenten Hydraulikabschnitte zwischen der Außenflächen der ersten und zweiten Rohrabschnitten und der entsprechenden Rohrinnenseiten des Messrohres.

Eine weitere mögliche Konstruktionseigenschaft dieser Erfindung ist, dass der erste Rohrabschnitt im Verhältnis zum zweiten in der Länge, dem Querschnitt und/oder dem Profil Unterschiede aufweist.

Eine weitere mögliche Konstruktionseigenschaft dieser Erfindung ist, dass der Krümmungswinkel des ersten Rohrabschnittes zumindest an einem Bereich einen anderen Winkel im Vergleich zum Krümmungswinkel des zweiten Rohrabschnittes aufweist.

Eine weitere mögliche Konstruktionseigenschaft dieser Erfindung ist, dass für die Weiterleitung der Verwirbelungsvibrationen mit hohen Wirbelablösungsfrequenzen innerhalb der Rohrleitung am Bereich des ersten Rohrabschnittes ein primärer Vibrationstransfersensor eingebunden wird.

Eine weitere mögliche Konstruktionseigenschaft dieser Erfindung ist, dass für die Weiterleitung der Verwirbelungsvibrationen mit niedrigen Wirbelablösungsfrequenzen innerhalb der Rohrleitung am Bereich des zweiten Rohrabschnittes ein sekundärer Vibrationstransfersensor eingebunden wird.

Eine weitere mögliche Konstruktionseigenschaft dieser Erfindung ist, dass die Barriere aus bi-metallischem Material gefertigt wird.

Eine weitere mögliche Konstruktionseigenschaft dieser Erfindung ist, dass sich die angesprochenen quantitativen Parameter auf Flüssigkeitstemperatur und/oder die Durchflussgeschwindigkeit beziehen.

Eine weitere mögliche Konstruktionseigenschaft dieser Erfindung ist, dass die zuvor genannte integrierte elektronische Kontrolleinheit so konfiguriert wird, dass die der Reihe nach durch den ersten und den zweiten Rohrabschnitt erzeugten Verwirbelungen von niedrigen und hohen Wirbelablösungsfrequenzen in Paaren zugeordnet werden und somit die Flüssigkeitstemperatur und/oder Durchflussgeschwindigkeit bestimmt werden kann.

Bei der Erfindung handelt es sich des Weiteren um einen Wassererhitzer oder durch Verwendung der geschlossenen Rohrleitung eines Durchlauferhitzerkreislaufes um die quantitative Messung des Durchflusses durch einen Wirbeldurchflussmesser, der über eine Messröhre verfügt und in die eine Barriere eingebunden ist, welche bei dem Kontakt mit dem Durchfluss Verwirbelungen erzeugt. Die Eigenschaft dieses Wirbeldurchflussmessers zeichnet sich dadurch aus, dass die Barrieren asymmetrisch innerhalb der zentralen Längsachse der Messröhre positioniert werden und somit beim Aufprall des Durchflusses auf die Barriere Verwirbelungen mit hohen und niedrigen Wirbelablösungsfrequenzen (36, 37) erzeugt werden können.

Je nach Anspruch besitzt die Erfindung die Eigenschaft, dass die Barriere an der zentralen Längsachse der Messröhre durch ein Rohrstück und an einer anderen Stelle der zentralen Längsachse durch ein zweites Rohrstück definiert ist und somit zwei nicht äquivalente Abschnitte beinhaltet.

Eine weitere mögliche Konstruktionseigenschaft dieser Erfindung ist die Definition der zwei nicht äquivalenten Hydraulikabschnitte zwischen der Außenflächen der ersten und zweiten Rohrabschnitten und der entsprechenden Rohrinnenseiten des Messrohres.

Eine weitere mögliche Konstruktionseigenschaft dieser Erfindung ist, dass der erste Rohrabschnitt im Verhältnis zum zweiten in der Länge, dem Querschnitt und/oder dem Profil Unterschiede aufweist.

Eine weitere mögliche Konstruktionseigenschaft dieser Erfindung ist, dass der Krümmungswinkel des ersten Rohrabschnittes zumindest an einem Bereich einen anderen Winkel im Vergleich zum Krümmungswinkel des zweiten Rohrabschnittes aufweist.

Eine weitere mögliche Konstruktionseigenschaft dieser Erfindung ist, dass für die Weiterleitung der Verwirbelungsvibrationen mit hohen Wirbelablösungsfrequenzen innerhalb der Rohrleitung am Bereich des ersten Rohrabschnittes ein primärer Vibrationstransfersensor eingebunden wird.

Eine weitere mögliche Konstruktionseigenschaft dieser Erfindung ist, dass für die Weiterleitung der Verwirbelungsvibrationen mit niedrigen Wirbelablösungsfrequenzen innerhalb der Rohrleitung am Bereich des zweiten Rohrabschnittes ein sekundärer Vibrationstransfersensor eingebunden wird.

Eine weitere mögliche Konstruktionseigenschaft dieser Erfindung ist, dass die Barriere aus bi-metallischem Material gefertigt wird.

Eine weitere mögliche Konstruktionseigenschaft dieser Erfindung ist, dass sich die angesprochenen quantitativen Parameter auf Flüssigkeitstemperatur und/oder die Durchflussgeschwindigkeit beziehen.

Eine weitere mögliche Konstruktionseigenschaft dieser Erfindung ist des Weiteren, dass in diesem System sowohl eine integrierte elektronische Kontrolleinheit als auch ein Vibrationssensor enthalten sind, mit deren Hilfe durch Verwirbelungen innerhalb der Rohrleitung oder des Messrohres entstandene Vibrationen festgestellt werden und mit denen die Wirbelablösungsfrequenzen in Spannungssignale umgewandelt werden und durch diese Spannungssignale zumindest eine der quantitativen Maßeinheiten für den Flüssigkeitsdurchfluss bestimmt werden soll.

Eine weitere mögliche Konstruktionseigenschaft dieser Erfindung ist, dass die zuvor genannte integrierte elektronische Kontrolleinheit so konfiguriert wird, dass die der Reihe nach durch den ersten und den zweiten Rohrabschnitt erzeugten Verwirbelungen von niedrigen und hohen Wirbelablösungsfrequenzen in Paaren zugeordnet werden und somit die Flüssigkeitstemperatur und/oder Durchflussgeschwindigkeit bestimmt werden kann.

Bei dem Funktionsprinzip dieser Erfindung handelt es sich des Weiteren um Abläufe, bei denen in einem Wassererhitzer oder durch eine geschlossene Rohrleitung eines Durchlauferhitzerkreislaufes, in die, um die quantitativen Messparameter des Flüssigkeitsdurchflusses bestimmen zu können, eine Barriere positioniert ist, welche bei der Durchflussunterbrechung Verwirbelungen erzeugt, welche wiederum zu mechanischen Vibrationen entlang der Rohrleitung führen, die dann durch einen Vibrationssensor empfangen und in Spannungssignale umgewandelt werden, und bei denen es zu einer Bewertung dieser Wirbelablösungsfrequenzen mit Hilfe einer elektronischen Kontrolleinheit kommt, somit zumindest eine der quantitativen Maßeinheiten für den Flüssigkeitsdurchfluss bestimmt werden soll. Dieses Funktionsprinzip hat zur Eigenschaft, dass folgende Abläufe beinhaltet sind:
mindestens eine niedrige und eine hohe Wirbelablösungsfrequenz wird mit mindestens einem Wert für einen Massenparameter in Relation gestellt,
die erwähnte Barriere wird innerhalb der Messröhre asymmetrisch positioniert,
die Barriere wird einem Flüssigkeitsdurchfluss ausgesetzt, bei dem sich Verwirbelungen mit hohen und niedrigen Wirbelablösungsfrequenzen bilden,
durch die erwähnte elektronische Kontrolleinheit werden die jeweiligen hohen und niedrigen Wirbelablösungsfrequenzen zugeordnet und somit kann zumindest ein Massenparameter des Durchflusses festgelegt werden.

Bei einer möglichen Anwendungseigenschaft dieses Funktionsprinzips dieser Erfindung handelt es sich um die Positionierung einer Barriere innerhalb eines durch zwei ungleiche Rohrstücke unterteilten Abschnittes.

Bei einer weiteren möglichen Anwendungseigenschaft dieses Funktionsprinzips dieser Erfindung handelt es sich um die Erzeugung eines nicht äquivalenten hydraulischen Querschnittes der Reihe nach zwischen den Rohrinnenseiten des Messrohres und dem zweiten und ersten Rohrabschnitt.

Bei einer weiteren möglichen Anwendungseigenschaft dieses Funktionsprinzips dieser Erfindung handelt es sich um die Verwendung einer Barriere aus bimetallischem Material.

Bei einer weiteren möglichen Anwendungseigenschaft dieses Funktionsprinzips dieser Erfindung handelt es sich darum, dass sich die erwähnten Massenparameter auf Flüssigkeitstemperatur und/oder die Durchflussgeschwindigkeit beziehen.

### KURZE ERLÄUTERUNG DER ABBILDUNGEN

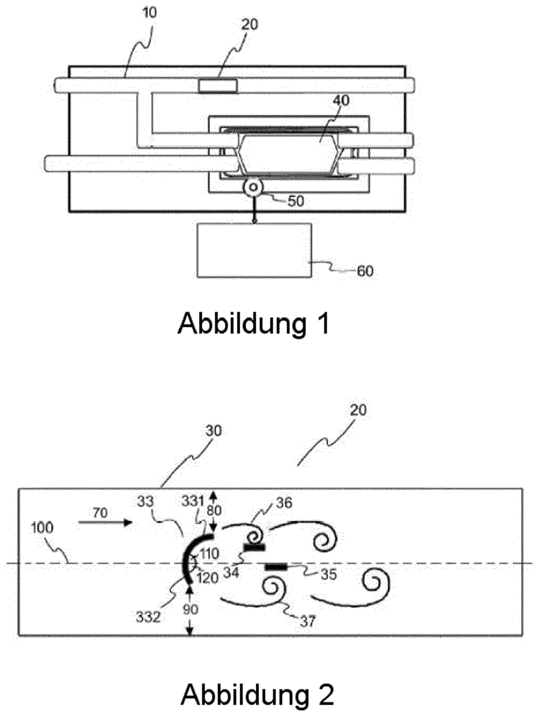

In der "Abbildung 1" wird ein hydraulisches Systemschema demonstriert, bei dem ein Wirbeldurchflussmesser zum Einsatz kommt.

In der "Abbildung 2" wird ein Querschnitt des Messröhrchens eines Wirbeldurchflussmessers aus der Vogelperspektive bildlich dargestellt.

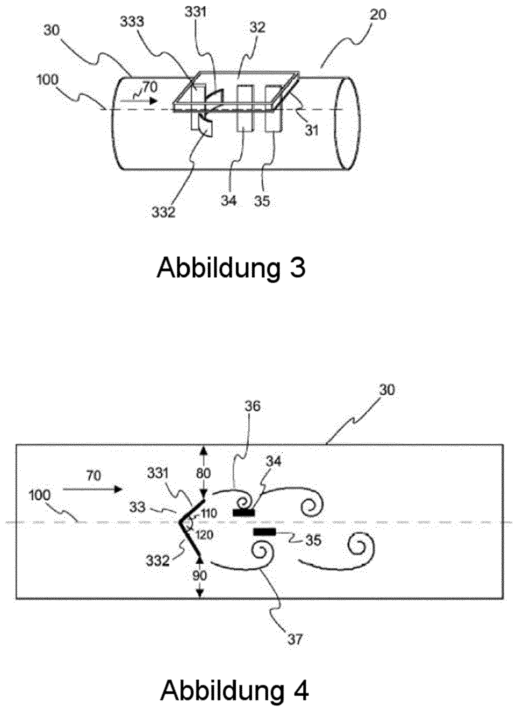

In der "Abbildung 3" wird der Aufbau der "Abbildung 2" aus einer anderen Perspektive demonstriert.

In der "Abbildung 4" wird ein Alternativaufbau für "Abbildung 2" aus der Vogelperspektive bildlich dargestellt.

### DETAILLIERTE BESCHREIBUNG DER ERFINDUNG

In dieser detaillierten Beschreibung wird der Wirbeldurchflussmesser als Bestandteil dieser Erfindung zum besseren Verständnis anhand von Beispielen, die keine einschränkende Wirkung haben, beschrieben.

In der "Abbildung 1" wird ein hydraulisches System gezeigt, das vorzugsweise bei Wassererhitzern wie Kombigeräten vorhanden ist. Dieses hydraulische System beinhaltet eine Warmwasserleitung (30). Das in der Rohrleitung (30) zirkulierende Wasser wird durch einen Wärmetauscher (40) einer Heizquelle gepumpt und fließt nach dem Erreichen der vorgesehenen Temperaturstufe weiter. In einer der Abzweigungen der Rohrleitung (10) wird als Bestandteil dieser Erfindung der Wirbeldurchflussmesser (20) zusammen mit dem Messröhrchen (30) in Verbindung eingesetzt. Wie im Detail nachfolgend beschrieben werden die durch das Messröhrchen (30) erzeugten mechanischen Vibrationen anhand eines Vibrationssensors (50) in Spannungssignale umgewandelt. Die aus diesem Vibrationssensor (50) herausgeleiteten Spannungssignale werden dann von einer elektrischen Kontrolleinheit (60) aufgenommen und somit Parameter bezüglich Temperatur- oder Durchflussvolumen für das Heizwasser ermittelt.

Der Vibrationssensor (50) ist an einem zentralen Punkt positioniert, um die Vibrationen an der Leitung aufnehmen zu können, und steht dabei vorzugsweise auch im Kontakt zum Wärmetauscher (40). Somit wird bei Verwendung von mehreren Messröhrchen (30) für die Messröhrchen (30) keine zusätzliche Verkabelung benötigt und die Vibrationssignale können durch eine einzige Zentralstelle empfangen werden. Jedoch kann bei einer alternativen Anwendung auch oberhalb oder innerhalb eines jeden Messröhrchens ein Vibrationssensor angebracht werden.

Bezugnehmend auf Abbildung 2 und 3 besteht das Messröhrchen (30) aus einer an beiden Enden offenen zylindrischen Form und kann somit mit der Rohrleitung (10) in Serie angeschlossen werden. In dem Messröhrchen (30) wurde eine Barriere (33) eingebaut, die so konfiguriert ist, dass sie der Durchflusskraft Widerstand leisten kann. Diese Barriere (33) ist so positioniert und konfiguriert, dass sie innerhalb des Messröhrchens (30) asymmetrisch aufgestellt und nicht parallel zu der Fließrichtung des Wassers (70) ausgerichtet ist. Des Weiteren sind die Ausmaße der Barriere (33) so eingestellt, dass sie nicht bis an die Innenwand des Messröhrchens (30) reichen. Bezugnehmend auf Abbildung 2 hat bei der bevorzugten Konstruktionseigenschaft dieser Erfindung die Barriere (33) eine Bogenform als Teil eines Kreisgebildes. Bei der alternativen Konstruktionseigenschaft in Abbildung 4 hingegen ist die Barriere (33) als unterbrochene Linearstruktur ausgerichtet.

Bezugnehmend auf Abbildung 2 und 3 ist die Barriere (33) entlang der zentralen Längsachse (100) des Messröhrchens (30) mit zwei zueinander in verschiedenen Abständen befindlichen primären (331) und sekundären (332) Rohrabschnitten positioniert. Aufgrund der unterschiedlichen Abstände besitzen auch der primäre hydraulische Durchmesser (80) zwischen der Außenseite des ersten Rohrabschnittes (331) und der Innenwand des Messröhrchens (30) und der sekundäre hydraulische Durchmesser (90) zwischen der Außenseite des zweiten Rohrabschnittes (332) und der Innenwand des Messröhrchens (30) unterschiedliche Ausmaße. Dementsprechend ist als Beispielkonstruktion in Abbildung 2 der primäre Rohrabschnitt (331) länger im Verhältnis zu dem sekundären Rohrabschnitt (332), sodass auch der primäre hydraulische Durchmesser (80) kleiner als der sekundäre hydraulische Durchmesser (90) ausfällt. Bei der Konstruktion in Abbildung 3 ist der primäre Rohrabschnitt (331) kürzer im Verhältnis zu dem sekundären Rohrabschnitt (332), sodass auch der primäre hydraulische Durchmesser (80) größer als der sekundäre hydraulische Durchmesser (90) ausfällt.

Zusätzlich hierzu ist auch der primäre Krümmungswinkel (110) im Verhältnis zu der Fließrichtung (70) in Ausrichtung des primären Rohrabschnittes (331) unterschiedlich zu dem sekundären Krümmungswinkel (120) im Verhältnis zu der Fließrichtung (70) in Ausrichtung des sekundären Rohrabschnittes (332). Dementsprechend ist auch das Durchflussprofil für die primär und sekundären hydraulischen Durchmesser (80, 90) von den Start- bis Endpunkten im Hinblick auf die primären und sekundären Rohrabschnitten (331, 332) voneinander unterschiedlich. Dementsprechend ist in zwei unterschiedlichen Konstruktionen in Abbildung 2 und 4 auch der primäre Krümmungswinkel (110) enger im Verhältnis zum sekundären Winkel (120), was ein Durchflussprofil mit einer langsameren Verengung des primären hydraulischen Durchmessers (80) entlang des ersten Rohrabschnittes (331) im Gegensatz zu dem sich schneller verengenden sekundären hydraulischen Durchmesser (90) entlang des zweiten Rohrabschnittes (332) zur Folge hat. Wie bereits erwähnt wurde, haben auch die verschiedenen Ausrichtungsformen der zwei Rohrabschnitte Auswirkungen auf das unterschiedliche Durchflussprofil für die primären und sekundären hydraulischen Durchmesser. So entstehen bei der krummlinienförmig ausgerichteten Barriere (33) in Abbildung 2 im Unterschied zu einer linear ausgerichteten Barriere (33) in Abbildung 4 Durchflussprofile von hydraulischen Durchmessern mit unterschiedlichen Eigenschaften.

Als Resultat wird gewährleistet, dass für die primären und sekundären Rohrabschnitte (331, 332) zumindest ein oder sämtliche Parameter hinsichtlich Länge, Ausdehnungswinkel der Fließrichtung (70) und Form unterschiedlich angeordnet sind und somit nacheinander für die primären und sekundären Rohrabschnitte (331, 332) ausreichend voneinander unterschiedliche Wirbelfrequenzen entstehen. Daraus folgend besteht auch die Möglichkeit, die Ausmaße der hydraulischen Durchmesser (80, 90) und/oder die Verengungsprofile voneinander unterschiedlich anzuordnen. So sind zum Beispiel bei den Konstruktionen in den Abbildungen 2 und 4 sämtliche oben aufgeführten Eigenschaften für den primären und sekundären Rohrabschnitt (331, 332) voneinander unterschiedlich und somit kann bewirkt werden, dass im primären Rohrabschnitt (331) Wirbel mit hohen Wirbelablösungsfrequenzen (37) und im sekundären Rohrabschnitt (332) Wirbel mit niedrigen Wirbelablösungsfrequenzen (37) erzeugt werden.

Gemäß Abbildung 2 und 4 werden die hohen Wirbelfrequenzen (37) in dem primären Rohrabschnitt (331) durch ein primäres Vibrationsüberträgermodul (34) und die niedrigen Wirbelfrequenzen (36) in dem sekundären Rohrabschnitt (332) durch ein sekundäres Vibrationsüberträgermodul (35) an die Rohrleitung (10) übermittelt. Bei diesen primären und sekundären Vibrationsüberträgermodulen (34, 35) handelt es sich um stäbchenförmige Teile, die an die Innenwand des Messröhrchens (10) angebracht sind.

Bezugnehmend auf die Abbildung 3 wird eine Konstruktionsvariante aufgezeigt, bei der über dem Messröhrchen (30) eine Verbindungsöffnung (31) vorgesehen ist. Auf der anderen Seite werden auf einem Verbindungsplättchen (32) eine Barriere (33) sowie die primären und sekundären Vibrationsüberträgermodule (34, 35) fixiert. Danach wird das Verbindungsplättchen (32) an der erwähnten Verbindungsöffnung (31) wasserdicht schließend montiert, sodass alle an das Verbindungsplättchen (32) fixierten Teile (33, 34, 35) in das Messröhrchen (30), und zwar so, dass sie dem Durchfluss des Messröhrchens (30) ausgesetzt sind, platziert werden. Wiederum bezugnehmend auf Abbildung 4 wird die Barriere (33) mithilfe eines senkrecht zu dem Verbindungsplättchen (32) verlaufenden und sich mit der entsprechenden zentralen Längsachse (100) überschneidenden Verbindungsstückes (333) im ausreichenden Maße parallel verlaufend auf das Verbindungsplättchen (32) fixiert. Somit werden durch die von der Barriere (33) am Verbindungsstück (333) an beiden Enden überstehenden Abschnitte die oben genannten primären und sekundären Rohrabschnitte (331, 332) definiert.

Eine weitere wichtige Neuheit ist die, dass die Barriere (33) aus bimetallischem Material gefertigt ist. Es ist bekannt, dass sich bimetallische Materialien, die einer bestimmten Temperatur ausgesetzt sind, ausdehnen. Dementsprechend dehnt sich auch die Barriere (33) aufgrund der Temperatur des Wärmewassers aus, was zur Folge hat, dass sich bei den primären und sekundären Rohrabschnitten (331, 332) die primären und sekundären Winkel (110, 120) verändern. Somit verändern sich aufgrund der Beschaffenheit der Rohrabschnitte auch die Wirbelablösungsfrequenzen und dieser Veränderungswert wird mit der Wassertemperatur korreliert. So wird z. B. ab einer Überschreitung eines bestimmten Wirbelablösungsfrequenzwertes auch die Temperatur erhöht.

Wie bereits oben aufgeführt werden die niedrigen und hohen Wirbelablösungsfrequenzwerte in Bezug auf die durch die Barriere (33) erzeugten Niedrig- und Hochfrequenzwirbel (36, 37) mithilfe eines Vibrationssensors (50) gemessen. Gleichzeitig werden die durch den Vibrationssensor (50) empfangenen Signaldaten mithilfe der Speichersoftware der elektronischen Kontrolleinheit (60) ausgewertet.

Im Lichte des oben Gesagten hat der Patentantragsteller gemäß der hier detailliert aufgeführten Beispielkonstruktionen Experimente durchgeführt und entsprechend der erlangten Ergebnisse eine Tabellendatenbank erstellt, deren Daten auf den Speicher der elektronischen Kontrolleinheit (60) übertragen wurden. Wie lediglich zu Beispielzwecken aus der unten aufgeführten Tabelle 1 entnommen werden kann, sind im Speicher der elektronischen Kontrolleinheit (60) mehrere Bandbreiten für niedrige und hohe Ablösungsfrequenzwerte definiert. Für alle sich überschneidenden Bandbreiten für niedrige und hohe Wirbelablösungsfrequenzwerte sind entsprechende Temperatur- und Durchflussratenwerte zugeordnet.

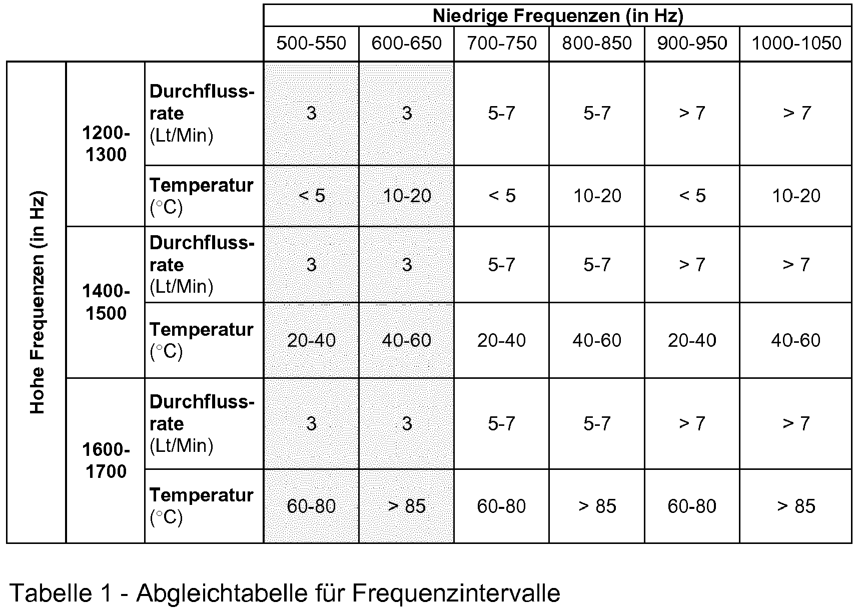

So wird bezugnehmend auf die Tabelle 1 z. B. bei einem gemessenen niedrigen Wirbelablösungsfrequenzwert von 530 Hz und einem hohen Wirbelablösungsfrequenzwert von 1250 Hz durch die Datenspeichersoftware der elektronischen Kontrolleinheit (60) für den Durchfluss durch das Messröhrchen (30) eine Durchflussrate von 3 Lt/Min und eine Temperatur von unter 5 °C ermittelt. Bei einem weiteren Beispiel, bei dem ein niedriger Wirbelablösungsfrequenzwert von 740 Hz und ein hoher Wirbelablösungsfrequenzwert von 1650 Hz gemessen wurde, wird durch die Datenspeichersoftware der elektronischen Kontrolleinheit (60) entsprechend der Tabelle für den Durchfluss durch das Messröhrchen (30) eine Durchflussrate von 5-7 Lt/Min und eine Temperatur von 60 bis 80 °C ermittelt.

Durch diese Zuordnungsfunktion wird in gewissem Sinne eine Gegenprobe ermöglicht. So kann dies als ein im Medium bereits aufgrund der mechanischen Vibration vorhandener Wirbelablösungsfrequenzwert gemessen werden. Jedoch ist bei dieser Erfindung zur Wertermittlung eine Zuordnung der niedrigen zu den hohen Wirbelablösungsfrequenzwerten erforderlich, womit falschen Messungen vorgebeugt werden kann.

Andererseits liegen gemäß Tabelle 1, bei dieser Art der Anwendung der Erfindung die Werte für die niedrigen Wirbelablösungsfrequenzen zwischen 500 und 1050 Hz und für die hohen Wirbelablösungsfrequenzen zwischen 1200 und 1700 Hz.

Wiederum bezugnehmend auf die Abbildung 1 kann gesagt werden, dass innerhalb eines gewissen Intervalls für niedrige Frequenzen die Veränderungen der Durchflussrate und auf der anderen Seite innerhalb eines gewissen Intervalls für hohe Frequenzen die Veränderungen der Temperatur korreliert werden können.

### REFERENZNUMMERN

10 Rohrleitung
20 Wirbeldurchflussmesser
30 Messröhrchen
31 Verbindungsstrecke
32 Verbindungsplättchen
33 Barriere
331 Primärer Rohrabschnitt
332 Sekundärer Rohrabschnitt
333 Verbindungsstück
34 Primäres Vibrationsüberträgermodul
35 Sekundäres Vibrationsüberträgermodul
36 Wirbel mit niedriger Frequenz
37 Wirbel mit hoher Frequenz
40 Wärmetauscher
50 Vibrationssensor
60 Elektronische Kontrolleinheit
70 Fließrichtung des Wassers
80 Primärer hydraulischer Durchmesser
90 Sekundärer hydraulischer Durchmesser
100 Zentrale Längsachse
110 Primärer Krümmungswinkel
120 Sekundärer Krümmungswinkel

## Patentansprüche

1. Durchlauferhitzer, bei dem in einer Rohrleitung (10) eine Flüssigkeitszirkulation erzeugt und dessen Durchfluss in Masseneinheiten gemessen werden soll, und der über einen an die besagte Rohrleitung (10) angeschlossenen Wirbeldurchflussmesser (20), der wiederum über ein Messröhrchen (30) verfügt, und dass in dem besagten Messröhrchen (30) eine Barriere (33) so positioniert ist, dass, wenn sie dem Durchfluss ausgesetzt ist, Verwirbelungen entstehen und die dadurch in der Rohrleitung (30) oder im Messröhrchen (30) entstehenden mechanischen Vibrationen durch einen Vibrationssensor (50) empfangen und diese den Wirbelablösungsfrequenzen entsprechend in Spannungssignale umgewandelt werden, und über eine elektronische Kontrolleinheit (60) verfügt, über die zumindest ein quantitativer Messparameter des Durchflusses anhand der besagten Spannungssignale bestimmt werden soll, wobei das Zusammensetzungsprinzip so ist, dass die Barriere (33) so positioniert ist, dass, wenn sie dem Durchfluss ausgesetzt ist, Verwirbelungen mit hohen und niedrigen Wirbelablösungsfrequenzen (36, 37) erzeugt werden und die besagte Barriere (33) innerhalb des Messröhrchens (30) im Verhältnis zu der zentralen Längsachse (100) des Messröhrchens (30) asymmetrisch angeordnet ist.

2. Wassererhitzer nach Anspruch 1 mit der Eigenschaft, dass die Barriere (33) an der zentralen Längsachse (100) der Messröhre durch ein primäres Rohrstück (331) und an einer anderen Stelle der zentralen Längsachse (100) durch ein zweites Rohrstück definiert ist, und somit zwei nicht äquivalente Abschnitte beinhaltet.

3. Es handelt sich um einen Durchlauferhitzer nach Anspruch 2, wobei zwei nicht äquivalente Hydraulikabschnitte (80, 90) zwischen der Außenflächen der ersten und zweiten Rohrabschnitten (331) und der entsprechenden Rohrinnenseiten des Mersrohres (30) definiert sind.

4. Wassererhitzer nach Anspruch 2 mit der Eigenschaft, dass der erste Rohrabschnitt (331) im Verhältnis zum zweiten Rohrabschnitt (332) in der Länge, dem Querschnitt und/oder dem Profil Unterschiede aufweist.

5. Wassererhitzer nach Anspruch 2 mit der Eigenschaft, dass der erste Rohrabschnitt (331) im Verhältnis zum zweiten Rohrabschnitt (332) zumindest an einem Bereich über einen zum sekundären Ausrichtungswinkel (120) verschiedenen primären Ausrichtungswinkel (110) verfügt.

6. Wassererhitzer nach irgendeinem der vorgenannten Ansprüche mit der Eigenschaft, dass für die Weiterleitung der Verwirbelungsvibrationen mit hohen Wirbelablösungsfrequenzen (36) innerhalb der Rohrleitung (10) am Bereich des ersten Rohrabschnittes (331) ein primärer Vibrationstransfersensor (34) eingebunden ist.

7. Wassererhitzer nach Anspruch 6 mit der Eigenschaft, dass für die Weiterleitung der Verwirbelungsvibrationen mit niedrigen Wirbelablösungsfrequenzen (37) innerhalb der Rohrleitung (10) am Bereich des zweiten Rohrabschnittes (332) ein sekundärer Vibrationstransfersensor (35) eingebunden ist.

8. Wassererhitzer nach irgendeinem der vorgenannten Ansprüche mit der Eigenschaft, dass die Barriere (33) aus bimetallischem Material gefertigt ist.

9. Wassererhitzer nach irgendeinem der vorgenannten Ansprüche mit der Eigenschaft, dass es sich bei den erwähnten Masseneinheitsparametern um die Flüssigkeitstemperatur und/oder die Durchflussgeschwindigkeit handelt.

10. Wassererhitzer nach Anspruch 9 mit der Eigenschaft, dass die zuvor genannte integrierte elektronische Kontrolleinheit (60) so konfiguriert wird, dass die der Reihe nach durch den ersten (331) und den zweiten Rohrabschnitt (332) erzeugten Verwirbelungen von niedrigen und hohen Wirbelablösungsfrequenzen in Paaren zugeordnet werden und somit die Flüssigkeitstemperatur und/oder Durchflussgeschwindigkeit bestimmt werden können.

11. Wirbeldurchflussmesser (20), der innerhalb einer Rohrleitung (10) eines Wasserwärmers oder eines Durchlauferhitzerkreislaufes eingesetzt wird, dessen Durchfluss in Masseneinheiten gemessen werden soll und der über ein an die besagte Rohrleitung (10) angeschlossenes Messröhrchen (30) verfügt und der in dem besagten Messröhrchen (30) eine Barriere enthält, (33) mit einem Zusammensetzungsprinzip, dass die Barriere (33) so positioniert ist, dass, wenn sie dem Durchfluss ausgesetzt ist, Verwirbelungen mit hohen und niedrigen Wirbelablösungsfrequenzen (36, 37) erzeugt werden, und die besagte Barriere (33) innerhalb des Messröhrchens (30) im Verhältnis zu der zentralen Längsachse (100) des Messröhrchens (30) asymmetrisch angeordnet ist.

12. Wirbeldurchflussmesser nach Anspruch 11 mit der Eigenschaft, dass die Barriere (33) an der zentralen Längsachse (100) der Messröhre durch ein primäres Rohrstück (331) und an einer anderen Stelle der zentralen Längsachse (100) durch ein zweites Rohrstück definiert ist, und somit zwei nicht äquivalente Abschnitte beinhaltet.

13. Wirbeldurchflussmesser nach Anspruch 12 mit der Eigenschaft, die durch die angesprochenen zwei verschiedenen Rohrabschnitte (331) der Reihe nach ihrer Außenflächen und der nicht äquivalenten zwei Hydraulikabschnitte (80,90) der sich gegenüberliegenden Rohrinnenseiten des Messrohres (30) definiert ist.

14. Wirbeldurchflussmesser nach Anspruch 12 mit der Eigenschaft, dass der erste Rohrabschnitt (331) im Verhältnis zum zweiten Rohrabschnitt (332) in der Länge, dem Querschnitt und/oder dem Profil Unterschiede aufweist.

15. Wirbeldurchflussmesser nach Anspruch 12 mit der Eigenschaft, dass der erste Rohrabschnitt (331) im Verhältnis zum zweiten Rohrabschnitt zumindest an einem Bereich über einen zum sekundären Ausrichtungswinkel (120) verschiedenen primären Ausrichtungswinkel (110) verfügt.

16. Wirbeldurchflussmesser nach irgendeinem der Ansprüche 11 bis 15 mit der Eigenschaft, dass für die Weiterleitung der Verwirbelungsvibrationen mit hohen Wirbelablösungsfrequenzen (36) innerhalb der Rohrleitung (10) am Bereich des ersten Rohrabschnittes (331) ein primärer Vibrationstransfersensor (34) eingebunden ist.

17. Wirbeldurchflussmesser nach Anspruch 16 mit der Eigenschaft, dass für die Weiterleitung der Verwirbelungsvibrationen mit niedrigen Wirbelablösungsfrequenzen (37) innerhalb der Rohrleitung (10) am Bereich des zweiten Rohrabschnittes (332) ein sekundärer Vibrationstransfersensor (35) eingebunden ist.

18. Wirbeldurchflussmesser nach irgendeinem der Ansprüche 11 bis 17 mit der Eigenschaft, dass die Barriere (33) aus bimetallischem Material gefertigt ist.

19. Wirbeldurchflussmesser nach irgendeinem der Ansprüche 11 bis 18 mit der Eigenschaft, dass es sich bei den erwähnten Masseneinheitsparametern um die Flüssigkeitstemperatur und/oder die Durchflussgeschwindigkeit handelt.

20. Wirbeldurchflussmesser nach Anspruch 11 des Weiteren mit der Eigenschaft, dass in diesem System sowohl eine integrierte elektronische Kontrolleinheit (60) als auch ein Vibrationssensor (50) enthalten sind, mit deren Hilfe durch Verwirbelungen innerhalb der Rohrleitung (30) oder des Messrohres (30) entstandene Vibrationen festgestellt werden und mit denen die Wirbelablösungsfrequenzen in Spannungssignale umgewandelt werden und durch diese Spannungssignale zumindest eine der quantitativen Maßeinheiten für den Flüssigkeitsdurchfluss bestimmt werden soll.

21. Wirbeldurchflussmesser nach Anspruch 20 mit der Eigenschaft, dass die zuvor genannte integrierte elektronische Kontrolleinheit (60) insofern konfiguriert wird, dass die der Reihe nach durch den ersten (331) und den zweiten Rohrabschnitt (332) erzeugten Verwirbelungen von niedrigen und hohen Wirbelablösungsfrequenzen in Paaren zugeordnet werden und somit die Flüssigkeitstemperatur und/oder Durchflussgeschwindigkeit bestimmt werden kann.

22. Abläufe nach dem Funktionsprinzip dieser Erfindung, bei denen des Weiteren in einem Wassererhitzer oder durch eine geschlossene Rohrleitung (10) eines Durchlauferhitzerkreislaufes, in die Rohrleitung (10), um die quantitativen Messparameter des Flüssigkeitsdurchflusses bestimmen zu können, eine Barriere (33) positioniert ist, welche bei der Durchflussunterbrechung Verwirbelungen erzeugt, welche wiederum zu mechanischen Vibrationen entlang der Rohrleitung (30) führen, die dann durch einen Vibrationssensor (50) empfangen und in Spannungssignale umgewandelt werden, und bei denen es zu einer Bewertung dieser Wirbelablösungsfrequenzen mithilfe einer elektronischen Kontrolleinheit (60) kommt, und somit zumindest eine der quantitativen Maßeinheiten für den Flüssigkeitsdurchfluss bestimmt werden soll, wobei dieses Funktionsprinzip zur Eigenschaft hat, dass folgende Abläufe beinhaltet sind:
mindestens eine niedrige und eine hohe Wirbelablösungsfrequenz wird mit mindestens einem Wert für einen Massenparameter in Relation gestellt,
die erwähnte Barriere (33) wird innerhalb der Messröhre (30) asymmetrisch positioniert,
die Barriere (33) wird einem Flüssigkeitsdurchfluss ausgesetzt, bei dem sich Verwirbelungen mit hohen und niedrigen Wirbelablösungsfrequenzen (36, 37) bilden,
durch die erwähnte elektronische Kontrolleinheit (60) werden die jeweiligen hohen und niedrigen Wirbelablösungsfrequenzen zugeordnet, und somit kann zumindest ein Massenparameter des Durchflusses festgelegt werden.

23. Funktionsprinzip nach Anspruch 22 einer Positionierung einer Barriere (33) innerhalb eines durch zwei ungleiche Rohrstücke, nämlich des primären Rohrabschnittes (331) und des sekundären Rohrabschnittes (332), unterteilten Abschnittes.

24. Funktionsprinzip nach Anspruch 23 einer Erzeugung eines nicht äquivalenten hydraulischen Querschnittes (80, 90) der Reihe nach zwischen den Rohrinnenseiten des Messrohres (30) und dem des zweiten (332) und ersten Rohrabschnittes (331).

25. Prinzip nach Anspruch 22, dessen Eigenschaft ist, dass die Barriere aus bimetallischem Material gefertigt ist.

26. Funktionsprinzip nach Anspruch 22, bei dem sich die erwähnten Massenparameter auf Flüssigkeitstemperatur und/oder die Durchflussgeschwindigkeit beziehen.
